# EUROPÄISCHE PATENTANMELDUNG

(11) **EP 3 453 982 A1**
(43) Veröffentlichungstag der Anmeldung: **13.03.2019**
(21) Anmeldenummer: 18189437.9
(22) Anmeldetag: 17.08.2018
(51) Int. Cl.: F24H 4/02, F24H 9/06

(54) **GEBÄUDE MIT LUFT-WASSER-WÄRMEPUMPENANLAGE**

(30) Priorität: 11.09.2017 DE 102017120898
(71) Anmelder: Vaillant GmbH, 42859 Remscheid (DE)
(72) Erfinder: Heinen, Lars, 53347 Alfter (DE); Spahn, Hans-Josef, 40699 Erkrath (DE); Lingk, Tobias, 42799 Leichlingen (DE)
(74) Vertreter: Popp, Carsten

(57) **Zusammenfassung**

Die Erfindung betrifft ein Gebäude (1) mit einer einen Innenraum (2) umschließenden Gebäudehülle (3) und mit einer Luft-Wasser-Wärmepumpenanlage (10). Erfindungsgemäß ist die Luft-Wasser-Wärmepumpenanlage (10) in einem gemeinsamen Gehäuse (20) oder auf einem gemeinsamen Rahmen (21) angeordnet und in einer Öffnung (4) der Gebäudehülle (3) montiert.

## Beschreibung

Die Erfindung betrifft ein Gebäude mit einer Luft-Wasser-Wärmepumpenanlage und ein Verfahren zum Montieren einer Luft-Wasser-Wärmepumpenanlage an einem Gebäude.

Gattungsgemäße Luft-Wasser-Wärmepumpenanlagen verfügen über eine Wärmepumpe zum Anheben des Temperaturniveaus mit einem Luft-Wärmetauscher zur Nutzung der Umgebungsluft als Umweltwärmequelle und einem Wärmetauscher zum Übertragen der Wärme auf höherem Temperaturniveau auf ein flüssiges Wärmeträgermedium. Über ein Rohrleitungssystem wird das Wärmeträgermedium einem Speicher oder einer Raumheizungsanlage zugeführt.

Die Patentanmeldung DE 10 2011 012 109 A1 offenbart eine Wärmepumpenanlage mit einem außerhalb eines Gebäudes angeordneten Luft-Sole-Wärmetauscher und einer innerhalb des Gebäudes angeordneten Wärmepumpe. Die Luft-Sole-Wärmetauscher und die Wärmepumpe sind räumlich getrennte Aggregate und mit einem Solekreislauf miteinander verbunden.

Aus der Patentanmeldung EP 2 354 709 A2 ist es weiterhin bekannt, die Wärmepumpe mit Luft-Wärmetauscher in einer Außeneinheit vorzusehen, die getrennt und außerhalb des Gebäudes aufgestellt ist.

Die gattungsgemäßen Wärmepumpenanlagen nach dem Stand der Technik haben den Nachteil, dass sie einen hohen Installationsaufwand erfordern, da die Verrohrung auf der Baustelle durchzuführen ist. Außerdem erfordern sie eine Aufstellfläche für die Außeneinheit, die insbesondere im Geschosswohnungsbau meist nicht zur Verfügung steht. Darüber hinaus wird gegebenenfalls eine Aufstellfläche innerhalb des Gebäudes für die Inneneinheit benötigt.

Es ist daher Aufgabe der Erfindung, eine Luft-Wasser-Wärmepumpenanlage bereitzustellen, die die Nachteile vermeidet.

Diese Aufgabe wird gemäß den Merkmalen des Anspruchs 1 dadurch gelöst, dass die komplette Luft-Wasser-Wärmepumpenanlage in einem Gehäuse oder auf einem gemeinsamen Rahmen in oder an einer Öffnung der das Gebäude umschließenden Gebäudehülle vorgesehen wird. Dies hat den Vorteil, dass einerseits eine Raum sparende Montage der Luft-Wasser-Wärmepumpenanlage am Gebäude möglich ist, ohne dass ein Aufstellort außerhalb oder innerhalb des Gebäudes benötigt wird. Ein weiterer Vorteil ist, dass die Luft-Wasser-Wärmepumpenanlage leicht montiert werden kann. Die Öffnung der Gebäudehülle kann Bauseits vorgenommen werden, so dass dann bei der Montage nur noch die komplette Luft-Wasser-Wärmepumpenanlage in die Öffnung montiert und angeschlossen werden muss.

In einer Weiterbildung der Erfindung ist eine Querschnittsfläche für die Öffnung vorgesehen, die mindestens die halben Fläche, bevorzugt mindestens die ganze Fläche eines Würfels vom Volumen der Luft-Wasser-Wärmepumpenanlage aufweist. Bei dieser Weiterbildung wird das Volumen der Öffnung, das sich aus der Querschnittsfläche und der Dicke der Gebäudehülle ergibt, vorteilhaft zur Unterbringung der Luft-Wasser-Wärmepumpenanlage genutzt.

In einer bevorzugten Ausgestaltung der Erfindung umfasst die Luft-Wasser-Wärmepumpenanlage einen Lüfter sowie einen Lufteinlass und Luftauslass, durch den die Umgebungsluft dem Luft-Wärmetauscher zugeführt wird.

Aus Wetterschutz-Gründen ist das Gehäuse oder zumindest ein teilweise umschließendes äußeres Gehäuseteil abdichtend mit der Gebäudehülle verbunden.

In einer bevorzugten Weiterbildung ist die Öffnung der Gebäudehülle mit einem Montagerahmen versehen, an den mit Hilfe eines Flansches die Luft-Wasser-Wärmepumpenanlage montierbar ist. Dieser Montagerahmen kann auch bereits bauseits im Rahmen der Maurer- oder Verputzarbeiten mit der Gebäudehülle verbunden werden, so dass die Luft-Wasser-Wärmepumpenanlage später besonders einfach zu montieren ist.

In einer besonders bevorzugten Weiterbildung umfasst die Luft-Wasser-Wärmepumpenanlage einen Speicher zum Speichern von Wärme.

Ein unabhängiger Verfahrensanspruch schützt das Verfahren zum Herstellen des erfindungsgemäßen Gebäudes mit einer Luft-Wasser-Wärmepumpenanlage.

Die Erfindung wird nun anhand der Figuren detailliert erläutert.

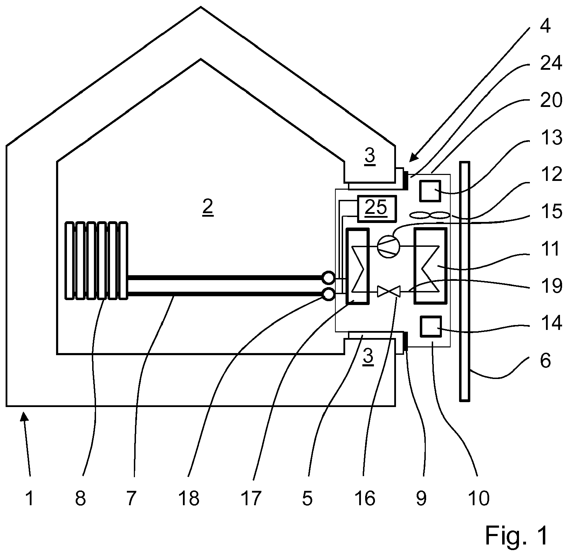

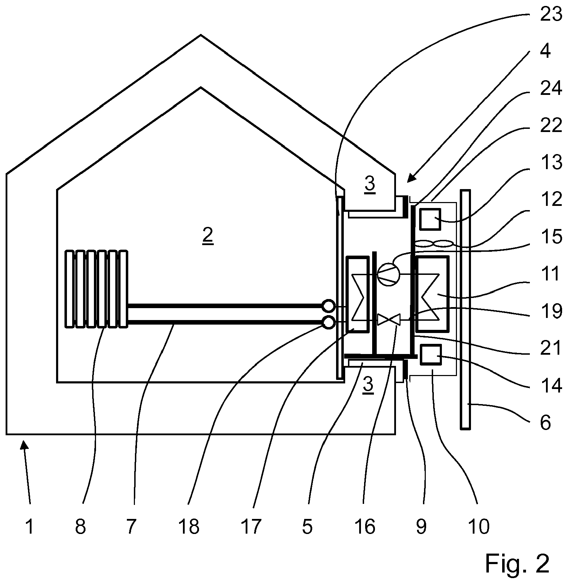

Figur 1 und Figur 2 zeigen ein erfindungsgemäßes Gebäude 1 mit einer Luft-Wasser-Wärmepumpenanlage 10. Während in Figur 1 die Luft-Wasser-Wärmepumpenanlage 10 in einem gemeinsamen Gehäuse 20 vorgesehen ist, ist diese in Figur 2 auf einem gemeinsamen Rahmen 21 aufgebaut. Ferner umfasst in Figur 1 die Luft-Wasser-Wärmepumpe 10 einen optionalen Speicher 25. Nachfolgend werden Figur 1 und 2 gemeinsam beschrieben und bei Unterschieden jeweils auf Figur 1 oder auf Figur 2 verwiesen.

Die Gebäudehülle 3 des Gebäudes 1 umschließt den Innenraum 2, Das Gebäude 1 umfasst die Luft-Wasser-Wärmepumpenanlage 10, die in einer Öffnung 4 in der Gebäudehülle 3 des Gebäudes 1 eingesetzt ist. Dabei kann sie sowohl zum Innenraum 2 als auch zur Außenseite des Gebäudes 1 bündig mit der Oberfläche der Gebäudehülle 3 abschließen oder herausragen. Durch die Unterbringung der Luft-Wasser-Wärmepumpe 10 in der Öffnung 4 wird Bauraum eingespart. Da dies in erster Linie dem Volumen des Innenraums 2 zugute kommt, schließt die Luft-Wasser-Wärmepumpenanlage 10 bevorzugt bündig mit der Innenseite der Gebäudehülle 3 ab oder ragt nur geringfügig in den Innenraum 2.

Über einen Lufteinlass 13 wird mittels eines Gebläses 12 Außenluft angesaugt und über den Luft-Wärmetauscher 11 geführt sowie über den Auslass 14 wieder in die Umgebung abgeführt. Beim Passieren des Luft-Wärmetauschers 11 wird der Außenluft Wärme entzogen. Mittels einer Wärmepumpe, die durch den Kältekreis 19 gebildet wird, in denen der Luft-Wasser-Wärmetauscher 11, einen Kompressor 15, ein Wärmetauscher 17 und eine Drossel 16 eingebunden sind, wird das Temperaturniveau der Außenluft auf ein höheres, zur Beheizung des Innenraums 2 des Gebäudes 1 oder zur Warmwasserbereitung nutzbares Temperaturniveau angehoben. Die Funktionsweise einer Kompressionswärmepumpe ist aus dem Stand der Technik bekannt. An der dem Innenraum zugewandten Seite weist die Luft-Wasser-Wärmepumpenanlage Anschlüsse 18 auf, an denen ein Rohrleitungssystem 7 anschließbar ist, über das die Wärme an eine Wärmesenke 8 geleitet wird. Eine hierfür erforderliche nicht dargestellte Umwälzpumpe kann innerhalb der Luft-Wasser-Wärmepumpenanlage 10 vorgesehen sein oder aber Bestandteil des Rohrleitungssystems 7 sein. Die Wärmesenke 8 ist zum Beispiel ein Radiator oder eine Fußbodenheizung zur Erwärmung des Innenraums 2 und/oder ein Warmwasserspeicher außerhalb der Luft-Wasser-Wärmepumpenanlage 10 zur Speicherung von Brauchwasser oder zur Speicherung der für Heizzwecke verwendeten Wärme. In Figur 1 ist ein in die Luft-Wasser-Wärmepumpenanlage 10 integrierter Speicher 25 dargestellt, in dem warmes Brauchwasser oder für Heizzwecke benötigte Wärme gespeichert werden kann. Ein solcher Speicher 25 ist optional sowohl für die Variante der Luft-Wasser-Wärmepumpenanlage 10 im gemeinsamen Gehäuse 20 als auch auf einem Rahmen 21 aufgebaut einsetzbar.

Der Vorteil ist, dass einerseits Bauraum für die Luft-Wasser-Wärmepumpenanlage 10 eingespart wird. Es kommt besonders zum Tragen, da Energie sparende Gebäude über eine relativ dicke Gebäudehülle 3 verfügen, so dass hier besonders viel Volumen durch die Öffnung 4 zur Verfügung steht. Daher ist die Querschnittsfläche der Öffnung 4 im Vergleich zum Volumen der Luft-Wasser-Wärmepumpenanlage so gewählt, dass ein großer Anteil des Volumens innerhalb der Öffnung 4 liegt.

Andererseits ist die Luft-Wasser-Wärmepumpenanlage besonders einfach zu montieren. Hierzu wird die Öffnung 4 bereits im Rohbau des Gebäudes 1 vorgesehen oder im Falle einer Sanierung in die Gebäudehülle 3 eingebracht. Somit kann nach Abschluss der Rohbauarbeiten die Luft-Wasser-Wärmepumpenanlage 10 einfach mit dem Gebäude 1 verbunden werden und das Rohrleitungssystem 7 mit den Anschlüssen 18 verbunden werden. Selbstverständlich, aber hier nicht dargestellt, müssen Verbindungen zur elektrischen Energieversorgung und gegebenenfalls mit Temperatursensoren hergestellt werden.

In vorteilhafter Weise wird beim Rohbau, beim Verputzen oder zu einem späteren Zeitpunkt die Gebäudehülle mit einem Montagerahmen 5 verbunden, in den die Luft-Wasser-Wärmepumpenanlage besonders einfach zu montieren ist. Eine Dichtung 9, die zwischen der Gebäudehülle 3 bzw. dem Montagerahmen 5 und dem Gehäuse 20 bzw. 22 vorgesehen ist, verhindert das Eindringen von Feuchtigkeit und Schmutz. Ein mit der Gebäudehülle 3 zu verbindender Verblender 6 auf der Außenseite kann die optische Erscheinung des Gebäudes 1 verbessern und schützt die Luft-Wasser-Wärmepumpenanlage 10 vor Beschädigungen.

Nachfolgend wird der unterschiedliche Aufbau der Luft-Wasser-Wärmepumpenanlage 10 bezüglich des gemeinsamen Gehäuses 20 bzw. des Rahmens 21 beschrieben. In Figur 1 ist die Luft-Wasser-Wärmepumpenanlage mit einem gemeinsamen Gehäuse 20 umgeben, das die einzelnen Aggregate der Luft-Wasser-Wärmepumpenanlage 10 fixiert. Bei der Montage wird die komplette Luft-Wasser-Wärmepumpenanlage 10 mit dem Gehäuse 20 in die Öffnung 4 eingebracht und mit Hilfe der Flansche 24 an der Gebäudehülle 3 befestigt. In Figur 2 dargestellt ist ein Rahmen 21, der die einzelnen Aggregate der Luft-Wasser-Wärmepumpenanlage fixiert. Bei einer Montage wird die Luft-Wasser-Wärmepumpenanlage 10 ohne Gehäuse in der Öffnung an der Gebäudehülle 3 montiert. Hierzu weist der Rahmen 21 ebenfalls Flansche 24 auf, die mit der Gebäudehülle 3 verbunden werden. Anschließend wird das äußere Gehäuseteil 22 und das innere Gehäuseteil 23 montiert. Dabei kann optional das innere Gehäuseteil 23 nach dem Anschließen des Rohrleitungssystems 7 an die Anschlüsse 18 und/oder nach dem Anschließen der elektrischen Energieversorgung montiert werden.

### Bezugszeichenliste

- 1: Gebäude
- 2: Innenraum
- 3: Gebäudehülle
- 4: Öffnung
- 5: Montagerahmen
- 6: Verblender
- 7: Rohrleitungssystem
- 8: Wärmesenke
- 9: Dichtung
- 10: Luft-Wasser-Wärmepumpenanlage
- 11: Luft-Wärmetauscher
- 12: Gebläse
- 13: Lufteinlass
- 14: Luftauslasss
- 15: Kompressor
- 16: Drossel
- 17: Wärmetauscher
- 18: Anschluss
- 19: Kältekreis
- 20: Gehäuse
- 21: Rahmen
- 22: äußeres Gehäuseteil
- 23: inneres Gehäuseteil
- 24: Flansch
- 25: Speicher

## Patentansprüche

1. Gebäude (1) mit einer einen Innenraum (2) umschließenden Gebäudehülle (3) und mit einer Luft-Wasser-Wärmepumpenanlage (10), welche durch einen Kältekreis (19) verbunden einen Luft-Wärmetauscher (11) zur Nutzung der Umgebungsluft als Umweltwärmequelle, einen Kompressor (15) zum Anheben des Temperaturniveaus, einen Wärmetauscher (17) zum Übertragen der Wärme auf höherem Temperaturniveau auf ein in einem Rohrleitungssystem (7) zirkulierenden flüssiges Wärmeträgermedium sowie eine Drossel (16) umfasst, wobei Anschlüsse zum Verbinden der Luft-Wasser-Wärmepumpenanlage (10) mit dem Rohrleitungssystem (7) zur Nutzung der Wärme im Gebäude (1) vorgesehen sind, **dadurch gekennzeichnet, dass** die Luft-Wasser-Wärmepumpenanlage (10) in einem gemeinsamen Gehäuse (20) oder auf einem gemeinsamen Rahmen (21) angeordnet ist, das oder der den Luft-Wärmetauscher (11), den Kompressor (15), den Wärmetauscher (17) und die Anschlüsse (7) trägt, dass die Gebäudehülle (3) eine Öffnung (4) aufweist, und dass die Luft-Wasser-Wärmepumpenanlage (10) so in der Öffnung (4) angeordnet ist, dass zumindest Teile der Luft-Wasser-Wärmepumpenanlage (10) die Öffnung (4) durchdringen, so dass sich der Luft-Wärmetauscher (11) außerhalb der Gebäudehülle und sich die Anschlüsse (7) im Innenraum (2) oder innerhalb der Öffnung (4) befinden.

2. Gebäude nach Anspruch 1, **dadurch gekennzeichnet, dass** die für die Querschnittsfläche A der Öffnung (4) und das Volumen V der Luft-Wasser-Wärmepumpenanlage (10) gilt A > 0,5 * V^{(2/3)}, bevorzugt A > V^{(2/3)}.

3. Gebäude nach Anspruch 1 oder 2, **dadurch gekennzeichnet, dass** die Luft-Wasser-Wärmepumpenanlage (10) ein Gebläse (12) umfasst, das durch einen Lufteinlass (13) und einen Luftauslass (14) dem Luft-Wärmetauscher (11) Umgebungsluft zuführen kann.

4. Gebäude nach einem der Ansprüche Anspruch 1 bis 3, **dadurch gekennzeichnet, dass** das Gehäuse (20) abdichtend mit der Gebäudehülle (3) verbunden ist.

5. Gebäude nach einem der Ansprüche Anspruch 1 bis 3, **dadurch gekennzeichnet, dass** die Luft-Wasser-Wärmepumpenanlage (10) zumindest teilweise ein äußeres Gehäuseteil (22) umschließt, das abdichtend mit der Gebäudehülle (3) verbunden ist.

6. Gebäude nach einem der Ansprüche 1 bis 5, **dadurch gekennzeichnet, dass** die Gebäudehülle (3) mit einem die Öffnung (4) umschließenden Montagerahmen (5) verbunden ist und dass die die Luft-Wasser-Wärmepumpenanlage (10) mit dem Montagerahmen verbunden (5) ist.

7. Gebäude nach Anspruch 6, **dadurch gekennzeichnet, dass** die Luft-Wasser-Wärmepumpenanlage (10) außenseitig einen Flansch (24) zur Verbindung mit dem Montagerahmen (5) oder der Gebäudehülle (3) umfasst.

8. Gebäude nach einem der vorhergehenden Ansprüche, **dadurch gekennzeichnet, dass** die Luft-Wasser-Wärmepumpenanlage (10) einen Speicher (25) zum Speichern von Wärme umfasst.

9. Verfahren zum Herstellen eines Gebäudes (1) mit den Merkmalen des Anspruchs 1, **gekennzeichnet durch** die Schritte
a) Bereitstellen einer einen Innenraum (2) umschließenden Gebäudehülle (3) mit einer Öffnung (4),
b) Einsetzen und abdichtendes Montieren der Luft-Wasser-Wärmepumpenanlage (10) in der Öffnung (4),
d) Anschließen des Rohrleitungssystems (7) an die Anschlüsse

10. Verfahren nach Anspruch 9, **dadurch gekennzeichnet, dass** zwischen den Schritten
a) und b) ein zusätzlichen Schritt
a') Einsetzen eines Montagerahmens (5) in der Öffnung (4)
vorgesehen ist und dass im Schritt b) die Luft-Wasser-Wärmepumpenanlage (10) im Montagerahmen (5) montiert wird.
